# FASCICULE DE BREVET EUROPEEN

(11) **EP 3 292 320 B1**
(45) Date de publication et mention de la délivrance du brevet: **04.09.2019**
(21) Numéro de dépôt: 16729009.7
(22) Date de dépôt: 03.05.2016
(51) Int. Cl.: F16F 15/133, F16F 15/14

(54) **DISPOSITIF DE PIÈGE VIBRATOIRE A RÉSONATEURS DISTRIBUES**
VIBRATIONSFALLE MIT VERTEILTEN RESONATOREN
VIBRATING-TRAP DEVICE WITH DISTRIBUTED RESONATORS

(30) Priorité: 04.05.2015 FR 1553974
(43) Date de publication de la demande: 14.03.2018
(73) Titulaire: PSA AUTOMOBILES S.A., 78300 Poissy (FR)
(72) Inventeur: SAUVAGE, Olivier, 92800 Puteaux (FR)
(86) Numéro de dépôt international: PCT/FR2016/051034
(87) Numéro de publication internationale: WO 2016/177961

(56) Documents cités:
- WO-A1-95/31653
- WO-A1-2006/103291
- WO-A1-2008/003879
- WO-A2-2011/026872
- DE-A1- 4 340 293
- DE-A1-102012 205 793
- DE-A1-102013 200 483
- FR-A1- 2 358 041
- US-A- 4 924 975

## Description

La présente invention concerne le domaine des pièges à bruits et vibrations, notamment les dispositifs permettant de réduire bruits et vibrations lorsqu'ils sont considérés comme des nuisances.

Plus particulièrement, l'invention porte sur un dispositif permettant de piéger des vibrations de torsion au sein de systèmes en rotation à l'aide de plusieurs résonateurs. Dans une application particulière non limitative, ces vibrations de torsion peuvent se produire par exemple dans les chaînes cinématiques de traction d'un véhicule automobile utilisant un moteur thermique à pistons, le dispositif de piégeage selon l'invention permettant plus particulièrement de réduire les vibrations au niveau d'un volant d'inertie placé vers la sortie d'un moteur thermique du véhicule automobile et un système de transmission, par exemple un embrayage ou une boîte de vitesses.

La catégorie des dispositifs de piège vibratoire selon l'invention se limite préférentiellement à des dispositifs dits passifs, étant entendu que ces dispositifs passifs n'embarquent pas ou ne nécessitent pas en supplément un système de contrôle, de rétroaction ou de régulation électrique.

Un grand nombre de dispositifs de piège vibratoire passifs existent pour faire office de pièges à vibrations qui sont localisés à un endroit d'une structure à traiter avec avantageusement une interface de couplage entre la structure à traiter et le dispositif de piège vibratoire de faible étendue comparée à l'étendue totale de la structure.

Ces dispositifs de piège vibratoire sont fréquemment appelés batteurs, étouffeurs, ou encore résonateurs de Helmholtz dans le domaine acoustique. Ils sont aussi connus sous l'appellation anglo-saxonne de « tuned mass damper » en étant aussi dénommés TMD. Ils se réduisent généralement, fonctionnellement, au premier ordre, à un système masse-ressort-amortisseur, que l'on vient positionner et accorder au mieux possible sur la structure vibrante qui est à traiter.

De tels dispositifs de piège vibratoire du type batteur sont connus et utilisés depuis fort longtemps. Un exemple parmi beaucoup d'autres, utilisant ce principe classique et proposant des intégrations et des moyens de réalisation particulièrement adaptés au problème des injecteurs haute pression est illustré par le document WO-A1-2008/003879. La majeure partie des dispositifs de piège vibratoire connus dans l'art antérieur peut avoir les inconvénients suivants. Le premier désavantage est que ces dispositifs comprennent généralement un ou éventuellement deux résonateurs qui ont des fréquences dites d'accord qui sont fixées une fois pour toutes ou difficilement changeables sans faire appel à un système de contrôle dit actif. Cela limite leur efficacité au voisinage d'une fréquence bien déterminée et donc limitative. Il en résulte par exemple un manque voire une absence d'efficacité lorsque les conditions de fonctionnement de la structure à piéger évoluent de par le fonctionnement, ou lorsque les propriétés du piège dérivent de par les aléas de production en série, par rapport à celles prises en compte pour le dimensionnement nominal du piège.

Un deuxième désavantage est que ces dispositifs doivent nécessairement intégrer, en pratique, en plus d'une fonction de flexibilité, une capacité d'amortissement vibratoire assez significative afin de dissiper les vibrations qui ont été piégées en leur sein. Généralement cette fonction est assurée par l'emploi plus ou moins important d'une matière présentant un facteur d'amortissement important, comme par exemple les élastomères.

Or ces matières qui ont des tenues et durées de vie limitées dans le temps ne peuvent de surcroît pas toujours être employées du fait de conditions défavorables régnant dans l'environnement de la structure à piéger, par exemple une pression ou une température trop élevée. De plus, les élastomères ont des caractéristiques variant avec la température et les précontraintes, etc., ce qui peut être en pratique très handicapant pour la mise au point des dispositifs de piège vibratoire. Enfin, ces matières susceptibles d'endommagement précoce sont souvent utilisées comme des structures porteuses d'autres constituants du piège, auquel cas leur rupture peut provoquer des dommages importants.

Un troisième désavantage est que ces dispositifs de piège vibratoire qu'on ajoute à la structure à traiter représentent enfin nécessairement une masse non négligeable, souvent de l'ordre de 10% de la masse de la structure à traiter, si l'on souhaite avoir une bonne efficacité. Or, dans un contexte dans lequel l'allégement des véhicules est une priorité dans leur conception, ceci représente un inconvénient important.

Enfin, en tant que quatrième désavantage notoire, ces dispositifs de piège vibratoire ont une efficacité parfois discutable car s'ils permettent d'éliminer ou réduire une résonance nuisible ils produisent d'autres résonances secondaires, ou résonances parasites, qui sont très souvent dommageables au final et limitent le potentiel de ces dispositifs.

Il existe aussi des pièges vibratoires à plusieurs résonateurs aussi connus sous l'abréviation anglaise de MTMD signifiant batteurs à plusieurs masses accordées. De tels pièges vibratoires se distinguent des pièges vibratoires à une masse accordée par le fait qu'ils utilisent plusieurs résonateurs vibratoires ou oscillateurs élémentaires pour fonctionner comme pièges à vibrations. Cela a entre autres conséquences positives l'extension de la gamme de fréquences pour lesquelles le piège peut être efficace.

Un point important est que, pour bien fonctionner, le piège vibratoire à multiples masses accordées ne doit pas juste être une juxtaposition de pièges vibratoires à une unique masse pris isolément. Il est nécessaire de précisément régler les couplages vibratoires entre les résonateurs élémentaires du système à multiples masses, le but étant que leurs effets se cumulent de manière optimale. En termes d'architecture organique, les pièges vibratoires à plusieurs résonateurs peuvent par exemple prendre l'aspect de structures à forme de peignes ou encore d'étoiles.

Le document US-A-2009/0078519 décrit des pièges vibratoires à plusieurs résonateurs en décrivant une fonction optimale de distribution des fréquences des résonateurs élémentaires dans un intervalle de fréquences lui aussi défini par une formule spécifique, ceci pour des pièges très génériques correspondant à des fonctions très disparates comme systèmes acoustiques, électromécaniques, microstructures de matériau, navires, bâtiments, etc., ce qui ne peut rendre le piège vibratoire spécifiquement adapté à et efficace pour toutes ces utilisations.

De plus, dans ce document, la performance recherchée est une réponse vibratoire à une excitation de type choc, ce qu'on imagine notamment utile pour des applications sismiques, tandis que la performance recherchée par la présente invention est en premier lieu la baisse du niveau vibratoire pour une excitation entretenue au cours du temps, se rapprochant plutôt de conditions stationnaires ou cyclo-stationnaires.

Par ailleurs, l'utilisation des pièges vibratoires dans des systèmes en rotation nécessite de porter une attention toute particulière à la distribution des résonateurs dans l'espace et notamment aux balourds statiques et dynamiques qu'il faut absolument maîtriser pour ces applications. Enfin, il n'est pas divulgué dans ce document de moyens pour adapter, si besoin est, le dispositif de piège vibratoire à la vitesse de rotation.

D'autre part, dans le document US-A-4 924 975, il est décrit un piège vibratoire en forme de peigne à plusieurs résonateurs, formant les dents d'un peigne, pour lequel piège il est prévu une ou plusieurs lames ou couches de métal et/ou matériaux amortissants avantageusement viscoélastiques, avantageusement empilées ou stratifiées. Dans ce type de technologie, il est utilisé un matériau ayant un fort pouvoir amortissant avec un facteur de perte élevé et sujet notamment à des dérives thermiques. Avec ce type d'architecture, comme dans la plupart des concepts connus, les lames et notamment les couches viscoélastiques jouent à la fois et au premier ordre des rôles fonctionnels de raideur et d'amortissement des résonateurs qu'elles constituent.

Par conséquent, le problème à la base de l'invention est de concevoir un dispositif de piège vibratoire pouvant fonctionner notamment mais pas exclusivement dans des conditions se rapprochant de conditions stationnaires pour une baisse du niveau vibratoire sur une structure sujette à une excitation entretenue au cours du temps occasionnant des vibrations, ceci en minimisant les balourds inertiels qui pourraient résulter du dispositif.

Il est en outre connu des documents DE-A1-10 2012 205793 et WO-A2-2011026872 un dispositif conforme au préambule de la revendication 1.

Pour atteindre cet objectif, il est prévu selon l'invention un dispositif de piège vibratoire destiné à venir se fixer sur une structure tournante sujette à des vibrations de torsion, le dispositif étant monté sur un axe de rotation destiné à être celui de la structure tournante et comprenant plusieurs résonateurs vibratoires pour le piégeage des vibrations, les résonateurs vibratoires étant voisins spatialement les uns des autres en étant liés à la structure tournante directement, ou indirectement par un support commun, chaque résonateur présentant la forme d'une lame avec une extrémité libre et une extrémité fixée rigidement au support ou à la structure tournante, la largeur de cette lame étant alignée avec l'axe de rotation, chaque résonateur présentant des fréquences propres de vibration, chaque résonateur étant réalisé en un matériau métallique, le dispositif présentant au moins partiellement une forme d'étoile avec chaque résonateur formant une branche de l'étoile, l'extrémité libre étant plus éloignée de l'axe de rotation que l'extrémité fixée, la distribution spatiale des masses du dispositif satisfaisant à son équilibrage inertiel relativement à l'axe de rotation, et au moins un résonateur est torsadé.

L'utilisation d'un matériau métallique, par exemple comme l'acier ou l'aluminium, permet dans la présente invention d'assurer globalement à la fois les rôles fonctionnels de masse et de raideur. De plus, l'architecture particulière du dispositif de piège selon la présente invention fait que chaque résonateur peut se contenter en pratique de présenter un amortissement significativement plus faible que dans les dispositifs de l'état de la technique. La forme au moins partiellement en étoile du dispositif avec chaque résonateur formant une branche de l'étoile permet une distribution spatiale de masse des résonateurs vibratoires telle qu'elle minimise les effets de balourd du dispositif de piège à vibrations. L'existence de fréquences et modes propres de vibrations est intrinsèque à la structure du résonateur. Le système masse-ressort amorti équivalent est une modélisation simplifiée, au premier ordre, permettant de rendre compte fonctionnellement du premier mode propre.

Il est à noter que la bonne répartition spatiale peut aussi être obtenue en jouant sur le profil de l'éventuelle structure réceptrice : les balourds peuvent ne pas être produits ou peuvent ne pas être gérables uniquement par l'ensemble des résonateurs.

C'est la structure de piège qu'on vient ajouter sur l'axe de rotation dans son ensemble qui ne doit pas présenter de balourds, donc, les résonateurs ainsi que la ou les structures porteuses intermédiaires, s'il y en a. Il est à noter que la bonne répartition spatiale peut aussi être obtenue en jouant sur le profil de l'éventuelle structure réceptrice.

Avantageusement, les fréquences propres des résonateurs sont différentes, en couvrant un intervalle fréquentiel destiné à s'étendre autour d'une ou des fréquences de résonance à traiter de la structure tournante, chaque résonateur ayant son spectre de fréquences propres légèrement décalé par rapport à celui des autres résonateurs.

Avantageusement, au moins un résonateur varie, en fonction de la distance à l'axe de rotation du dispositif, en forme et/ou en aire de section par rapport à la fibre neutre du résonateur.

Avantageusement, au moins un résonateur comprend une première portion longitudinale la plus proche de l'axe de rotation présentant une première section et une deuxième portion longitudinale la plus éloignée de l'axe de rotation présentant une deuxième section, la première section étant d'aire inférieure à celle de la deuxième section.

Avantageusement, le résonateur est torsadé en une seule torsion de 90°.

Avantageusement, quand plusieurs résonateurs sont torsadés en présentant chacune un noeud de torsion, les noeuds de torsion des résonateurs se trouvent à des distances différentes de l'axe de rotation du dispositif.

Avantageusement, au moins une partie des résonateurs a une fibre neutre curviligne et / ou présente une inclinaison non nulle par rapport à un rayon partant de l'axe de rotation et passant par l'extrémité fixée du résonateur.

Avantageusement, les résonateurs présentent un point d'inflexion qui sépare chaque résonateur en deux parties rectilignes formant un angle entre elles dans un plan orthogonal à l'axe de rotation du dispositif.

Avantageusement, les résonateurs sont agencés les uns par rapport aux autres pour qu'au moins une partie des fréquences propres des résonateurs évolue selon un rapport de proportionnalité avec la vitesse de rotation du dispositif. De ce fait, en plus de son efficacité accrue, le dispositif de piège vibratoire peut adapter sa gamme fréquentielle de fréquences propres des résonateurs à la vitesse de rotation de la structure tournante et ainsi suivre et traiter un ou plusieurs harmoniques de cette vitesse de rotation.

Avantageusement, le dispositif comprend un collier amortissant et concentrique à l'axe de rotation lié aux résonateurs à proximité de leur extrémité fixée, pour augmenter et au besoin ajuster les propriétés d'amortissement de chaque résonateur lorsque des métaux à très faible facteur de perte sont utilisés.

Avantageusement, le dispositif comprend un dépôt de matière amortissante est présent à la base de l'extrémité fixée du résonateur, pour également augmenter et au besoin ajuster les propriétés d'amortissement de chaque résonateur lorsque des métaux à très faible facteur de perte sont utilisés.

Avantageusement, les résonateurs ont des distributions de fréquences propres telles que l'écart entre la plus faible et la plus élevée des fréquences propres fondamentales de ces résonateurs est supérieur à 10% de la valeur moyenne de l'ensemble de ces fréquences propres fondamentales.

Avantageusement, au moins une partie des résonateurs garde une section transversale convexe en fonction de sa distance à l'axe de rotation du dispositif.

Avantageusement, quand le dispositif présente une forme partielle en étoile, le dispositif porte au moins une masse de compensation ou un ajout de matière disposé symétriquement à la forme partielle en étoile par rapport à l'axe de rotation.

Avantageusement, les résonateurs présentent un poids ou une matière différent les uns des autres ou au moins une dimension différente les uns des autres, la dimension étant choisie parmi la longueur ou celles réglant la forme des résonateurs.

Avantageusement, le poids, la matière ou ladite au moins une dimension de résonateurs voisins sont déterminés en fonction de l'équilibrage inertiel de la distribution spatiale des masses des résonateurs tout autour de l'axe de rotation.

L'invention porte aussi sur un ensemble de piège vibratoire, caractérisé en ce qu'il comprend un empilage le long de l'axe de rotation de plusieurs dispositifs de l'invention.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 est une représentation schématique d'une vue de face d'un premier mode de réalisation d'un dispositif de piège vibratoire avec plusieurs résonateurs vibratoires disposés en branches d'étoile selon la présente invention,
- la figure 2 est une représentation schématique d'une vue de face d'une variante de réalisation du piège vibratoire de la figure 1,
- la figure 3 est une représentation schématique d'une vue de face d'un deuxième mode de réalisation d'un dispositif de piège vibratoire selon la présente invention, les résonateurs présentant des renforts massiques disposés en différents points sur chaque résonateur,
- la figure 4 est une représentation schématique d'une vue en coupe longitudinale d'un résonateur sous forme de tige torsadée pouvant faire partie d'un dispositif de piège vibratoire selon un troisième mode de réalisation, la forme de la tige étant variable,
- la figure 5 est une représentation schématique d'une vue en coupe longitudinale d'un résonateur sous forme de tige pouvant faire partie d'un dispositif de piège vibratoire selon un quatrième mode de réalisation, la section de la tige étant variable avec une aire croissante vers une extrémité de la tige destinée à être la plus éloignée de l'axe de rotation du dispositif de piège vibratoire,
- la figure 6 est une représentation schématique d'une vue de face d'un cinquième mode de réalisation d'un dispositif de piège vibratoire selon la présente invention, ce dispositif étant partiellement montré à cette figure, un collier réunissant les résonateurs, ce mode étant montré agrandi par rapport à ceux des figures 1 à 3,
- la figure 7 est une représentation schématique d'une vue de face d'un sixième mode de réalisation d'un dispositif de piège vibratoire selon la présente invention, ce dispositif étant partiellement montré à cette figure, un dépôt d'une matière amortissante étant effectué au voisinage de la base des résonateurs à proximité de l'axe de rotation du dispositif, ce mode étant montré agrandi par rapport à ceux des figures 1 à 3,
- les figures 7a et 7b donnent une représentation schématique d'une vue de face d'un mode de réalisation d'un dispositif de piège vibratoire selon la présente invention, où les résonateurs présentent une ligne moyenne qui ne passe pas par l'axe de rotation du dispositif de piège vibratoire, pour deux situations selon par exemple qu'on utilise ou non un support commun,
- les figures 8 à 10 montrent des courbes illustrant les avantages obtenus par un dispositif de piège vibratoire selon la présente invention,
- la figure 11 illustre trois évolutions de fréquences propres en fonction de la vitesse de rotation de la structure tournante.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier les dimensions et les proportions des différents éléments illustrés ne sont pas représentatives de la réalité.

La présente invention concerne un dispositif de piège vibratoire, aussi appelé batteur, comportant de multiples résonateurs selon une architecture distribuée permettant de piéger, sur une structure ou un système tournant sujet aux vibrations, tout ou une partie des vibrations qu'on juge néfastes. Elle se caractérise notamment par un agencement particulier des résonateurs vibratoires sur le dispositif, ces résonateurs pouvant avoir des caractéristiques mécaniques, par exemple sans être limitatif des dimensions, des matériaux constitutifs, un agencement ou une forme tels que le dispositif de piège vibratoire puisse réaliser un absorbeur efficace et robuste pour les vibrations néfastes.

La présente invention s'applique préférentiellement à la réduction des vibrations de torsion sur des structures en rotation, par exemple en rotation autour d'un axe déterminé. De tels dispositifs de piège vibratoire trouvent une application particulière pour des véhicules automobiles, plus particulièrement à proximité de l'interface du moteur et de la transmission dans ces véhicules et spécialement à proximité d'un ou dans un volant d'inertie associé à un moteur à piston, ou d'une chaîne de traction sujette à des vibrations acycliques.

Les conditions d'utilisation du dispositif selon la présente invention sont entre autres celles pour lesquelles la structure tournante est soumise à une excitation entretenue, par exemple, dans le cas de véhicules automobiles, par le fonctionnement acyclique du moteur équipant ces véhicules.

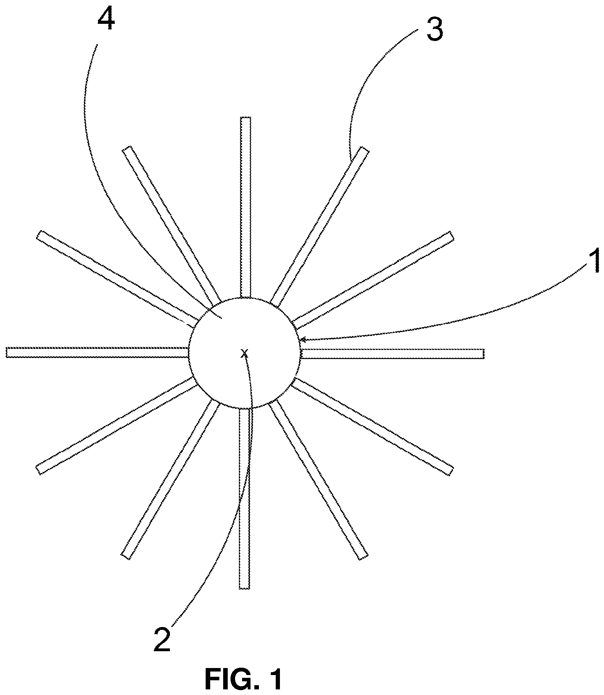

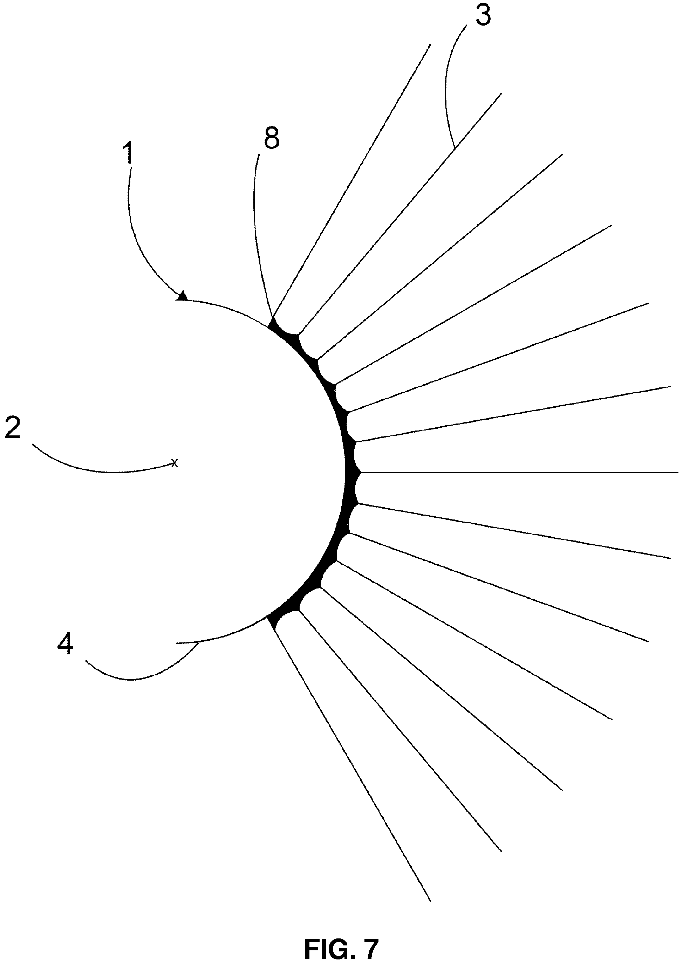

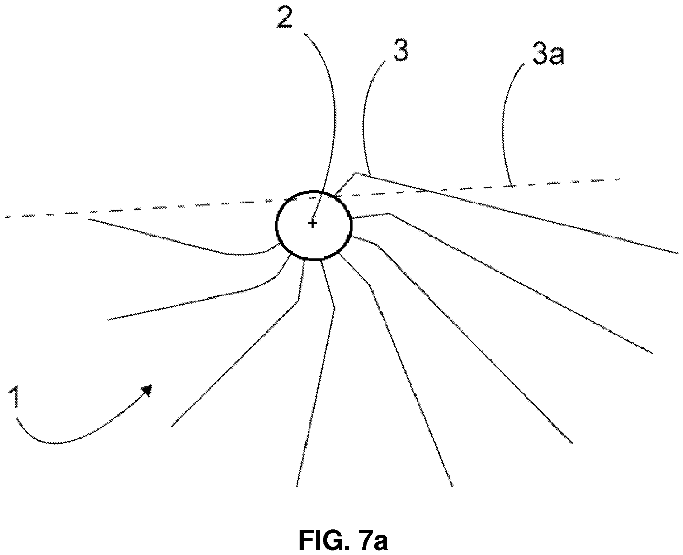

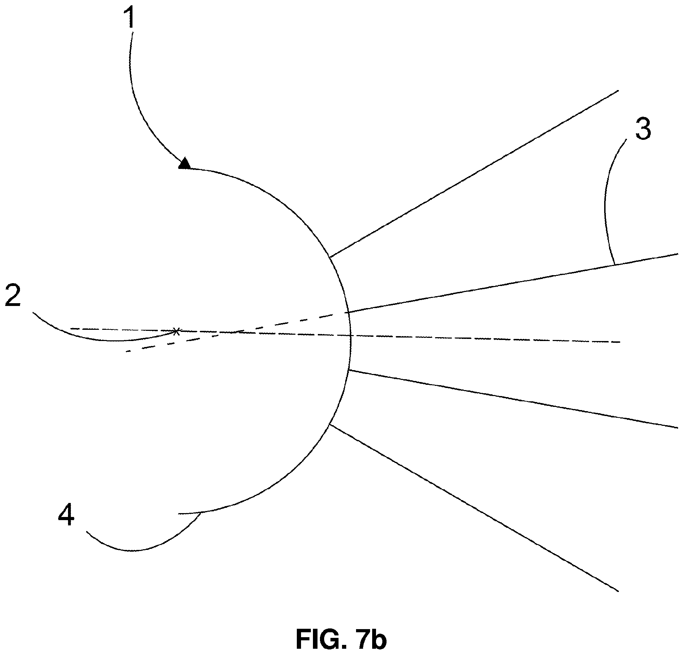

En se référant aux figures 1 à 7, 7a et 7b pour les diverses caractéristiques du dispositif de piège vibratoire, le dispositif 1, destiné à venir se fixer sur une structure tournante sujette à des vibrations, est monté sur un axe 2 de rotation destiné à être celui de la structure tournante et comprend plusieurs résonateurs 3 vibratoires pour le piégeage des vibrations.

Le dispositif 1 de piège à vibrations est positionné à un endroit de la structure tournante dite à traiter, cette structure tournante pouvant avoir une géométrie et un comportement complexe, ainsi qu'être comprise dans un système couplé également complexe. Les résonateurs 3 vibratoires sont voisins spatialement les uns des autres en étant liés rigidement à la structure tournante directement. En alternative, les résonateurs 3 peuvent être liés rigidement par un support 4 commun intermédiaire, visible à la figure 1, donc indirectement liées à la structure tournante.

Chaque résonateur 3 est longiforme avec une extrémité reliée au support 4 commun ou à la structure tournante. Dans le cas d'une utilisation d'un support 4, ce support 4 commun peut être un organe tel qu'un arbre de rotation, bien plus rigide que les résonateurs 3, voire indéformable.

Chaque résonateur 3 présente des fréquences et des modes propres de vibration. Il peut être modélisé au premier ordre par un système masse-ressort amorti équivalent, présentant un degré de liberté. Les fréquences et modes propres de vibration de chaque résonateur sont définis dans la situation où ce dernier est fixé à la structure tournante ou au support 4 commun.

Selon la présente invention, chaque résonateur 3 est réalisé en un matériau métallique, le dispositif 1 présentant au moins partiellement une forme d'étoile avec chaque résonateur 3 formant une branche de l'étoile, avec une extrémité libre plus éloignée de l'axe 2 de rotation que l'extrémité fixée, la distribution spatiale des masses des résonateurs 3 et de l'éventuel support 4 étant équilibrée tout autour de l'axe 2 de rotation de manière à éviter des effets néfastes de balourd. La forme en étoile est particulièrement bien visible aux figures 1 à 3, 6 et 7 pour lesquelles seul un résonateur est référencé 3 par figure. Le matériau métallique est préférentiellement de l'acier ou de l'aluminium.

La forme en étoile peut cependant être incomplète tout autour du dispositif 1 en n'étant présente que sur un arc de cercle du support ou de l'axe 2 de la structure tournante sur lequel le dispositif est préférentiellement rattaché. Dans ce cas, le dispositif 1 porte au moins une masse de compensation disposée sensiblement symétriquement à la forme partielle en étoile par rapport à l'axe 2 de rotation, ou bien encore un évidement pratiqué dans l'éventuelle structure support 4 de manière à compenser le balourd, cette ou ces masses ou évidements de compensation des balourds n'étant pas montrés aux figures.

Chacun des résonateurs 3 possède plusieurs fréquences et modes propres de vibration. Le spectre de chaque résonateur comprend ainsi plusieurs fréquences propres en dessous d'une fréquence maximale d'intérêt pour le cas à traiter. Les fréquences propres des résonateurs 3 peuvent être différentes en couvrant un intervalle fréquentiel destiné à s'étendre autour de la fréquence de résonance néfaste de la structure tournante, chaque résonateur 3 ayant son spectre de fréquences propres légèrement décalé par rapport à celui des autres résonateurs 3. De préférence, la première des fréquences propres (c'est-à-dire la plus basse, appelée fondamentale) est autour de la fréquence de résonance néfaste à traiter.

Les résonateurs 3 peuvent présenter un volume, un poids ou une matière différents les uns des autres. Ceci peut par exemple résulter de l'ajout une masse inertielle 9. Cette masse inertielle 9 peut être placée sur le résonateur 3 à un point de la longueur spécifique pour lui conférer la possibilité de et par là ajuster une bonne adaptation du piège aux vitesses de rotation de la structure, notamment dans le cas où ces vitesses varient significativement. Ceci peut aussi résulter du fait qu'une dimension des résonateurs 3 peut être différente entre les résonateurs 3. Cette dimension peut être par exemple choisie parmi la longueur ou l'étendue de la section des résonateurs 3.

Les masses inertielles 9 peuvent servir de masses de compensation des balourds mais les masses de compensation selon la présente invention peuvent être autres que les masses inertielles 9. Ainsi, quand la forme en étoile est complète ou importante en présentant des portions symétriques par rapport à l'axe 2 de rotation, le poids, la matière ou la dimension de résonateurs 3 voisins, la distribution spatiale des masses des résonateurs 3, et accessoirement des masses inertielles 9 qu'ils portent peuvent entre autres être déterminés en fonction de l'équilibrage inertiel global du dispositif de piège relativement à l'axe 2 de rotation.

Comme il est visible aux figures 1 à 7, 7a et 7b, chaque résonateur 3 peut être sous la forme d'une tige, les oscillations de flexion des tiges formant résonateurs 3 s'effectuant préférentiellement dans un plan orthogonal à l'axe 2 de rotation du dispositif 1, lorsque la structure tournante est en rotation. Dans ce cas, il est avantageux que les tiges présentent une forme de lame fixée sensiblement dans le sens de l'axe 2 de rotation, autrement dit dont la direction de la plus grande dimension de section transversale est alignée avec l'axe 2 de rotation, avec par exemple une section transversale de forme rectangulaire ou elliptique plutôt que carrée ou ronde. Pour des raisons de tenue mécanique, la lame est préférentiellement en une seule pièce monobloc. Dans le cas où la lame est reliée au support 4 commun, l'ensemble se présente sous la forme d'une pièce monobloc. De préférence, la lame garde une section transversale convexe en fonction de sa distance à l'axe de rotation 2.

Selon un mode de réalisation préféré, la distribution spatiale de masse des résonateurs 3 avantageusement sous forme de lames est telle qu'elle minimise les balourds dynamiques du dispositif 1 de piège à vibrations.

Selon un autre mode de réalisation parmi d'autres, chaque résonateur 3 peut agir au sein du piège global non seulement selon son premier mode propre mais aussi selon tous ses autres modes propres de vibration, permettant ainsi au système une gamme fréquentielle d'efficacité potentiellement très large, contrairement aux systèmes TMD usuels.

De plus, parmi les paramètres majeurs de mise au point du piège sur la structure tournante sujette à des vibrations néfastes, les spectres des différents résonateurs 3 ne sont pas identiques mais peuvent être décalés les uns par rapport aux autres et s'étaler régulièrement, par exemple linéairement, pour couvrir un intervalle fréquentiel plus ou moins large autour de la fréquence de résonance de la structure tournante, voire de ses harmoniques.

Par exemple, chaque résonateur 3 élémentaire diffère donc d'un autre, en premier lieu, par le spectre de ses fréquences propres de vibration, chacun ayant son spectre de fréquences propres légèrement décalé par rapport à celui des autres. Pour gérer la bonne distribution des fréquences propres des résonateurs 3, on peut notamment faire légèrement varier d'un résonateur 3 à l'autre leurs dimensions de structure, par exemple la longueur, les dimensions de la section, l'aire de la section, etc.

Dans une forme de réalisation de la présente invention, au moins le profil ou le positionnement spatial des résonateurs 3 peuvent être prédéterminés pour qu'au moins une partie des fréquences propres des résonateurs 3 évolue sensiblement avec un rapport de proportionnalité à la vitesse de rotation du dispositif 1.

Avantageusement, le profil, par exemple la longueur ou l'évolution de la section des lames formant résonateurs en fonction de sa distance à l'axe de rotation 2 du dispositif 1 et le positionnement des résonateurs, par exemple leur espacement à leur extrémité proche de l'axe de rotation 2 du dispositif de piège vibratoire peuvent être simultanément prédéterminés.

Globalement, pour des lames curvilignes, la fibre neutre ne se réduit pas une à une unique droite, il existe une série de droites tangentes, suivant le point de tangence de la lame ramenée à sa fibre neutre. Avantageusement, selon une variante de réalisation, le dimensionnement et le positionnement des résonateurs 3 au niveau de leur fixation peuvent être courbés ou inclinés, et ainsi leur donner une droite moyenne 3a qui ne passe pas par l'axe de rotation 2 comme montré aux figures 7a et 7b. Cette droite moyenne 3a est définie d'une manière générale, dans un plan orthogonal à l'axe 2 de rotation du dispositif 1, comme la droite passant par le point de fixation du résonateur 3 et dont la pente par rapport à une droite passant par l'axe 2 de rotation et le point de fixation est la moyenne des pentes des tangentes de la fibre neutre du résonateur 3. Le fait que cette droite moyenne ne passe pas par le centre de rotation, est une traduction géométrique que par exemple la lame est fixée « inclinée » et pas fixée à angle droit sur la structure tournante.

A la figure 7a, les résonateurs 3 présentent un point d'inflexion qui sépare chaque résonateur en deux parties rectilignes formant un angle entre elles dans un plan orthogonal à l'axe 2 de rotation du dispositif 1. La ligne moyenne 3a formée par les deux parties rectilignes ne passe pas par l'axe de rotation 2 au centre du dispositif 1.

A la figure 7b, la ligne moyenne 3a est aussi une droite ne passant pas par le centre du dispositif 1 par lequel passe l'axe de rotation 2 car dans cette variante de réalisation les résonateurs 3 longiformes sont inclinés par rapport à la normale sortante du le support commun 4.

Pour les modes de l'invention spécifiquement dédiés une adaptation à la vitesse de rotation de la structure tournante, on obtient ainsi que toutes ou une partie des fréquences propres des résonateurs 3 évoluent sensiblement avec un rapport de proportionnalité à la vitesse de rotation de la structure tournante. Ceci permet au dispositif de piège vibratoire de fonctionner en ciblant au moins un ordre relativement à la vitesse de rotation, c'est-à-dire une harmonique de rotation de la structure tournante à traiter.

En effet, lorsque la vitesse de rotation de la structure tournante et donc du dispositif 1 augmentent, les fréquences propres des résonateurs 3, avantageusement sous forme de tiges et plus particulièrement de lames, augmentent également sous l'effet des forces d'inertie. Le ciblage peut n'être qu'approximatif, l'architecture du piège selon l'invention le rendant par ailleurs relativement robuste à des dérives de la ou des fréquences de résonance néfastes à traiter sur la structure.

Les figures suivantes donnent quelques exemples schématiques de réalisations possibles selon l'invention du piège qui est à fixer sur la structure à traiter.

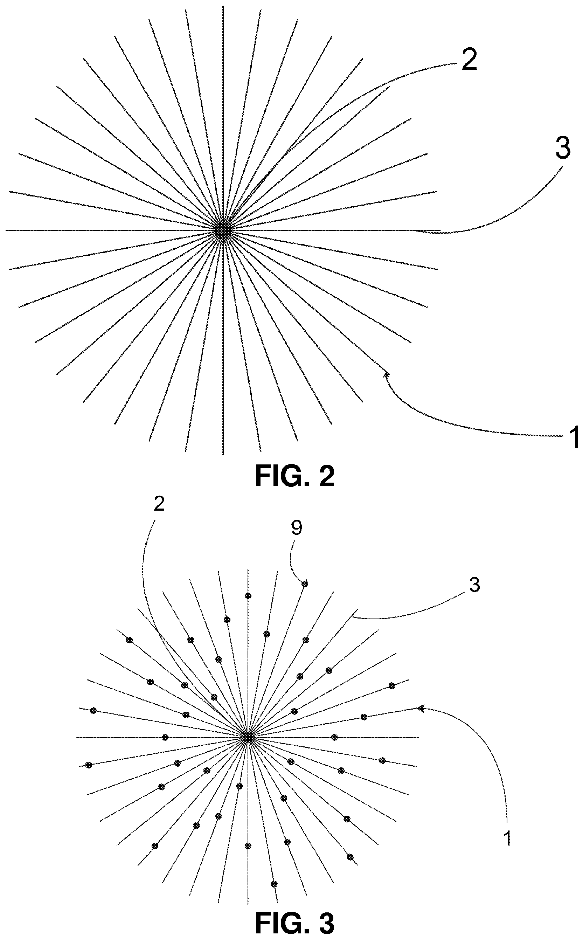

A la figure 2, les résonateurs dont un seul est référencé 3 pour simplification sont sous forme de tiges qui peuvent aussi présenter des longueurs différentes bien que cela ne soit pas le cas à cette figure. A la figure 3, les résonateurs dont un seul est référencé 3 sont sous forme de tiges et plus particulièrement de lames portant une masse inertielle ou renflement de matière 9 disposée à des niveaux différents sur la longueur de chaque résonateur 3 du dispositif 1 de piège vibratoire. Il est à noter que, dans d'autres variantes de l'invention, ces masses ou renflements peuvent être avantageusement remplacées par des trous ou évidements.

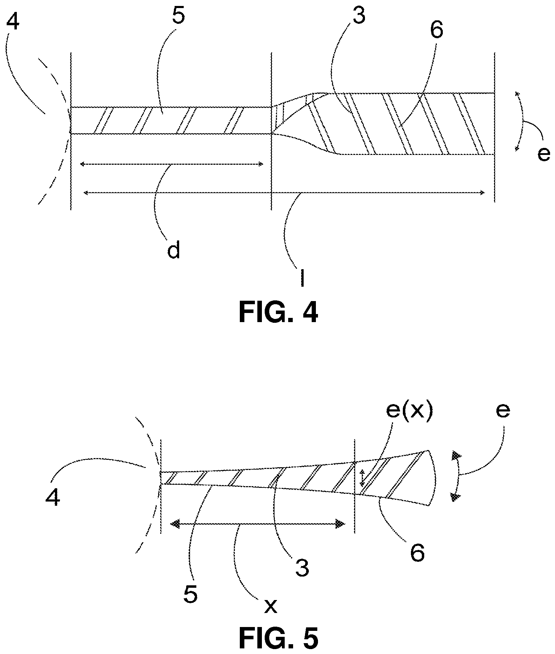

La figure 4 montre une lame formant résonateur 3 qui présente une torsade avec au moins un noeud. Dans un dispositif de piège vibratoire, quand plusieurs lames formant résonateurs 3 sont torsadées en présentant chacune un noeud de torsion, les noeuds de torsion des tiges peuvent se trouver à des distances différentes de l'axe de rotation du dispositif et permettre ainsi un réglage optimal de la distribution des spectres de fréquences propres des résonateurs.

Aux figures 4 et 5, en se référant aux figures précédentes pour les références non mentionnées à ces figures, l'aire de la section e d'au moins un résonateur 3 du dispositif de piège vibratoire varie en fonction de la distance à l'axe 2 de rotation du dispositif 1.

Avantageusement, tous les résonateurs 3 du dispositif de piège vibratoire présentent cette caractéristique. A ces deux figures, au moins un résonateur 3 à section variable comprend une première portion 5 longitudinale la plus proche de l'axe 2 de rotation et, le cas échéant, du support commun 4, présentant une première section transversale. Le résonateur 3 à section variable comprend une deuxième portion 6 longitudinale la plus éloignée de l'axe 2 de rotation présentant une deuxième section, transversale, la première section étant d'aire inférieure à la deuxième section.

A la figure 4, la lame formant résonateur 3 peut être torsadée, avantageusement en une seule torsion de 90°, le noeud de torsion se trouvant avantageusement à la jonction de la première portion 5 avec la deuxième portion 6, cette jonction pouvant être à des points de longueur différents pour les résonateurs 3. A la figure 4, un accroissement de section peut aussi commencer à partir du noeud de torsion de la tige formant résonateur 3. Ce qui va maintenant être décrit au sujet de l'accroissement de l'aire de section de la tige peut aussi être valable pour une tige non torsadée en étant par exemple sensiblement rectiligne.

A la figure 4, pour un résonateur 3 sous forme d'une lame de longueur totale l, la première portion 5 présente une section e constante sur toute sa longueur d. Ensuite la première portion 5 est prolongée par la deuxième portion 6 qui présente, après une augmentation rapide, une section sensiblement constante supérieure à la section de la première portion 5 sur sa longueur l-d.

Il convient de différencier forme de la section et aire de la section : on peut torsader avec une aire et une forme de section constantes mais celles-ci peuvent tourner progressivement dans l'espace.

A la figure 5, pour un résonateur 3 sous forme d'une lame, la première portion 5 présente une aire de section e constante sur toute sa longueur. Ensuite, la première portion 5 est prolongée par la deuxième portion 6 qui présente une section de surface croissante en éloignement de l'axe 2 de rotation. Soit un point de la deuxième portion 6 à une distance x de l'axe 2 de rotation, le cas échéant du support commun 4, il peut être défini une fonction e(x) donnant l'aire de la section e de la deuxième portion 6 en fonction de la distance x.

La présente invention représente un moyen simple et efficace de réaliser un piège permettant de réduire les vibrations d'une structure tournante, en utilisant un couplage particulier entre une collection de résonateurs élémentaires accordés, sans pour autant nécessiter l'emploi d'élastomères ou d'autres matières organiques à fort pouvoir dissipatif pour la réalisation de l'essentiel de la fonction raideur de ces résonateurs. Ceci est avantageux étant donné que ces matériaux à fort pouvoir amortissant ont des inconvénients importants dans leur environnement de travail, notamment un environnement dans un moteur de véhicule automobile, comme leur sensibilité à la température, leur vieillissement, les attaques chimiques dont ils peuvent être l'objet, etc.

Dans certains modes de réalisation, on peut donc n'utiliser que des matériaux de type métallique, adapter les architectures, le nombre de résonateurs, ainsi que les liaisons entre les différentes pièces qui sont le siège de micro-frottements et ainsi d'amortissement vibratoire, ce qui pour la présente invention peut suffire à fournir le niveau d'amortissement globalement nécessaire au dispositif de piégeage pour être efficace. Un grand nombre de résonateurs sera de ce point de vue plus favorable qu'un petit nombre. Ce faible amortissement requis peut aussi provenir de frottements ou de couplages acoustiques avec l'air ambiant liés aux vibrations des tiges formant les résonateurs.

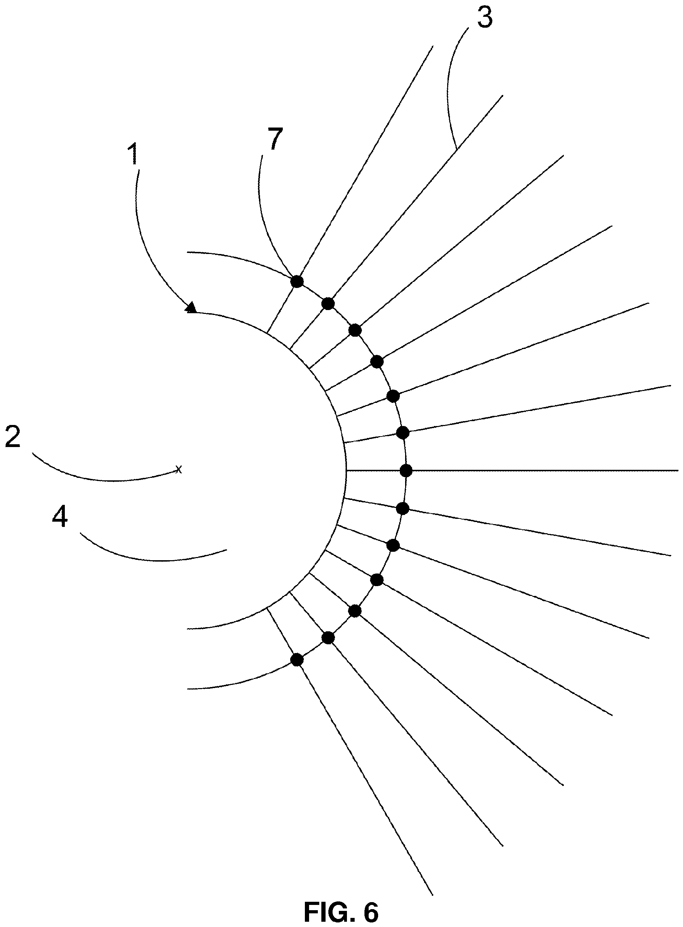

Cependant, il est possible, dans d'autres modes de réalisation, par exemple dans des situations dans lesquelles il ne s'avère pas possible de distribuer un nombre suffisant de résonateurs 3 et/ou des situations où l'ensemble des résonateurs 3 forme une structure extrêmement peu amortie, par exemple monobloc, d'ajouter un peu de matières organiques à fort pouvoir d'amortissement intrinsèque afin d'apporter sa fonction de dissipation à l'ensemble du dispositif de piégeage. Ceci va être par exemple montré aux figures 6 et 7.

On peut ainsi ajouter, comme il va être montré à la figure 6, à l'ensemble des résonateurs une pièce en plastique ou en caoutchouc s'agrafant ou s'entrelaçant vers la base des tiges formant résonateurs 3. En alternative, il est possible de disposer, comme il va être montré à la figure 7, un dépôt de matière, par exemple une cire ou une résine organique, notamment phénolique, à la base des tiges formant résonateurs 3, au besoin en quantités différentes selon les endroits.

A la figure 6, chaque résonateur 3 comprend, à proximité de l'axe 2 de rotation du dispositif 1, le cas échéant du support commun 4, un collier 7 entourant les résonateurs 3 à proximité de leur extrémité fixée en étant sensiblement concentrique à l'axe 2 de rotation. Le collier 7 permet de présenter une fonction d'amortissement.

Par exemple, le collier 7 peut être en plastique ou en caoutchouc. Le collier 7 peut être continu tout autour du dispositif 1 de piégeage en formant un cercle présentant son centre confondu avec celui de l'axe 2 de rotation ou peut former seulement un arc de cercle quand la forme en étoile n'est pas complète tout autour de l'axe 2 de rotation.

A la figure 7, chaque résonateur 3 comprend, à proximité de l'axe 2 de rotation du dispositif 1, le cas échéant du support commun 4, un dépôt 8 de matière, la matière du collier ou du dépôt étant sélectionnée pour augmenter les propriétés d'amortissement de chaque résonateur 3 qui est touché. Par exemple, la matière du dépôt 8 peut être de la résine ou de la colle à la base des tiges formant résonateurs 3, ce qui confère au dépôt 8 une fonction d'amortissement. Le dépôt 8 peut en outre être coiffé sur sa face tournée vers l'extérieur par une mince structure de précontrainte.

Il est évident que lorsqu'on recourt aux dispositifs de collier ou dépôts dans le piège il faut en tenir compte pour l'équilibrage inertiel de l'ensemble du dispositif de piège.

En se référant aux figures 1 à 7, 7a et 7b, pour tous les modes de réalisation de la présente invention, de manière non limitative, un des paramètres principaux de mise au point du dispositif de piège vibratoire selon l'invention est le nombre de résonateurs 3, sachant qu'à masse globale fixée du dispositif 1 utiliser un grand nombre de résonateurs 3 est souvent plus favorable qu'utiliser un nombre réduit de résonateurs 3.

Pour toutes les variantes montrées aux figures 1 à 7, au moins un résonateur 3 ou une partie des résonateurs 3 ou tous les résonateurs 3 peuvent être formés avec des lames dont la fibre neutre est droite. En alternative, au moins un résonateur 3 ou une partie des résonateurs 3 ou tous les résonateurs 3 peuvent être formés avec des lames dont la fibre neutre, à vitesse de rotation nulle, comprend des courbures, ou bien dont la fibre neutre est droite mais inclinée par rapport aux directions radiales du dispositif 1 de piégeage, autrement dit par rapport à un rayon partant de l'axe 2 de rotation et passant par l'extrémité fixée du résonateur 3. Ceci peut être particulièrement bien vu à la figure 7b.

On accroît ainsi l'effet des forces inertielles sur l'évolution des fréquences propres des tiges lorsque la vitesse de rotation évolue. Ceci peut fournir un levier de mise au point supplémentaire utile au réglage du suivi des harmoniques de la vitesse de rotation par l'homme de l'art.

Dans une variante de réalisation, on peut obtenir l'équilibrage inertiel du dispositif de piège vibratoire en empilant le long de l'axe 2 de rotation deux, trois ou N fois un même sous-ensemble de résonateurs 3, en les décalant angulairement les uns par rapport aux autres de manière à créer suffisamment de symétries dans l'agencement global pour satisfaire l'équilibrage inertiel. Il est aussi évidemment possible de réaliser les résonateurs 3 en utilisant plusieurs matériaux, notamment différents par leur raideur et masse volumique. Un résonateur peut comprend plusieurs matériaux ou un matériau qui est différent d'autres résonateurs.

Selon des variantes de la présente invention, quand le dispositif de piège vibratoire est destiné à un moteur de véhicule automobile, le dispositif peut être intégré au volant moteur ou positionné juste à côté de celui-ci ou bien encore intégré au système d'embrayage qui peut être simple ou double, ou d'une autre architecture encore.

Sans que cette indication soit limitative, on peut par exemple utiliser une ou plusieurs dizaines de résonateurs élémentaires pour former le dispositif de piège vibratoire selon l'invention.

Un autre paramètre important de mise au point est la distribution des fréquences propres des résonateurs dans le dispositif, préférentiellement telle que l'on ait, dans un ou des intervalles de fréquences encadrant la ou les fréquences de résonance à traiter sur la structure tournante, la présence d'un grand nombre de fréquences propres des résonateurs 3 élémentaires, assez régulièrement espacées les unes des autres, par exemple linéairement avec un pas de décalage fréquentiel sensiblement constant, ou encore avec un pas relatif sensiblement constant. Plus généralement, des distributions optimales, et donc des formes de distributions fréquentielles optimales, peuvent être affinées pour le cas particulier d'application que l'homme de l'art souhaite construire. De cette manière, dans cette ou ces intervalles de fréquences, un grand nombre de résonateurs 3 interfèrent et se couplent en vibration pour produire l'effet de piège vibratoire. Concernant la distribution des fréquences propres des résonateurs, outre les décalages fréquentiels entre spectres des résonateurs, des paramètres importants pour la mise au point sont les limites inférieures et supérieures de ces intervalles fréquentiels. On pourra ainsi typiquement mettre en place des résonateurs 3 ayant des distributions de fréquences propres telles que l'écart entre la plus faible et la plus élevée des fréquences propres fondamentales de ces résonateurs 3 est supérieur à 10% de la valeur moyenne de l'ensemble de ces fréquences propres fondamentales. Cette distribution permet définir un taux minimum de désaccordage global des résonateurs entre eux, utile dans notre application.

Un autre paramètre est la masse globale du piège, à adapter en fonction du niveau d'efficacité globalement souhaité mais qui pourra être limité, par exemple d'un ou plusieurs ordres de grandeur plus faibles devant celle de la structure tournante à traiter. Conformément à l'invention, encore un autre paramètre est la distribution spatiale des masses formant le dispositif 1 de piège vibratoire telle que les balourds statiques, ou les balourds statiques et dynamiques, soient minimisés voire annulés.

Un autre paramètre est le type des formes élancées formant les résonateurs 3, ainsi que leur positionnement, préférentiellement tels que l'évolution des fréquences propres avec la vitesse de rotation s'adapte si besoin harmonieusement à l'évolution des fréquences des résonances à traiter, notamment si ces résonances se produisent selon des harmoniques de la vitesse de rotation de la structure tournante à traiter.

Enfin, un autre paramètre à prendre en compte est l'amortissement propre aux résonateurs 3 qui sera en pratique non nul mais significativement moins important que celui qu'il faudrait apporter à un piège de l'état de la technique à résonateur simple.

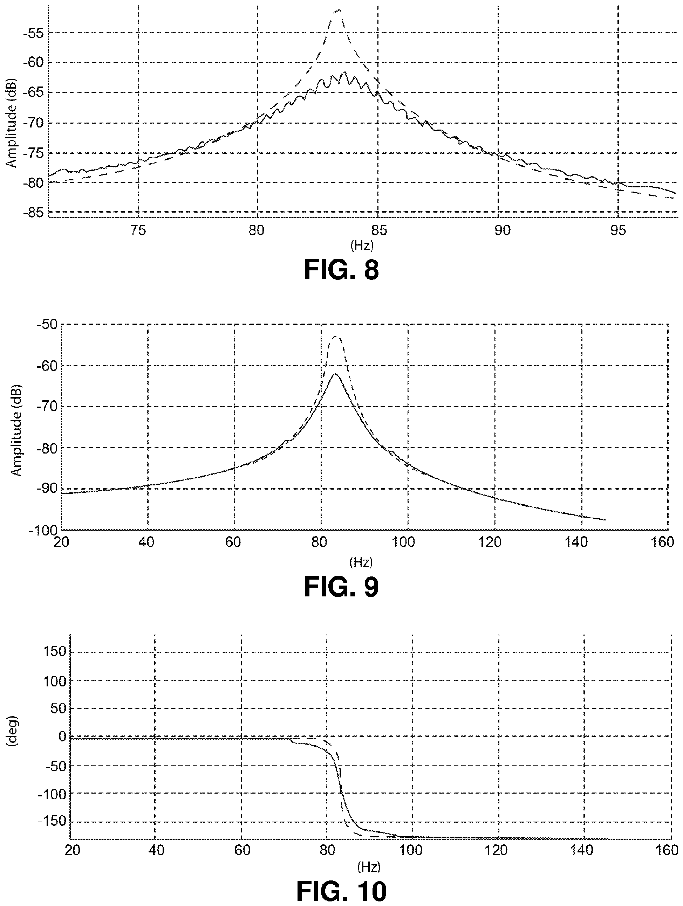

Selon un mode possible de réalisation, il est possible de dimensionner le dispositif de telle sorte que la distribution fréquentielle des premières fréquences propres λ^{k}₁, avec k variant de 1 à n des résonateurs 3 soit sensiblement linéaire, c'est-à-dire avec un pas fréquentiel régulier et couvre un intervalle de fréquences sensiblement centré sur la fréquence propre à traiter de la structure tournante, pour réduire des vibrations produites par une résonance de la structure, par exemple au voisinage de 85 Hz, comme il sera montré ultérieurement aux figures 8 à 10.

Dans ce cas, purement à but illustratif, on pourra positionner une cinquantaine de résonateurs 3 dont les premières fréquences propres sont régulièrement espacées entre environ 70 et 100 Hz, l'ensemble ayant une masse représentant entre 0,5 et 5% de la masse de la structure tournante qui doit être traitée.

Les courbes des figures 8 à 11 vont maintenant être détaillées.

Les courbes des figures 8 et 9 montrent respectivement deux modules, en décibels, et une phase, en degrés, de fonctions de transfert vibratoire caractérisant la structure tournante sujette aux vibrations avec une résonance dommageable vers 85 Hz, ceci avec le dispositif de piège vibratoire selon l'invention en trait plein et sans ce dispositif en pointillés.

Le dispositif de piège vibratoire selon la présente invention permet une réduction très significative des niveaux à la résonance, de l'ordre de 10 dB, cela sans ajouter de pics de résonance importants, contrairement aux effets d'un dispositif à multiples résonateurs selon l'état de la technique. Cela se voit sur les figures 8 et 9 notamment.

La figure 8 montre un zoom du module de ce transfert vibratoire autour de la résonance traitée avec des vagues sur la courbe en trait plein obtenue avec un dispositif selon l'invention, donnant une sorte de visualisation de la distribution régulière, par exemple ici sensiblement linéaire, des fréquences propres des résonateurs élémentaires dans la bande de fréquences choisie, allant approximativement de 70 à 100 Hz.

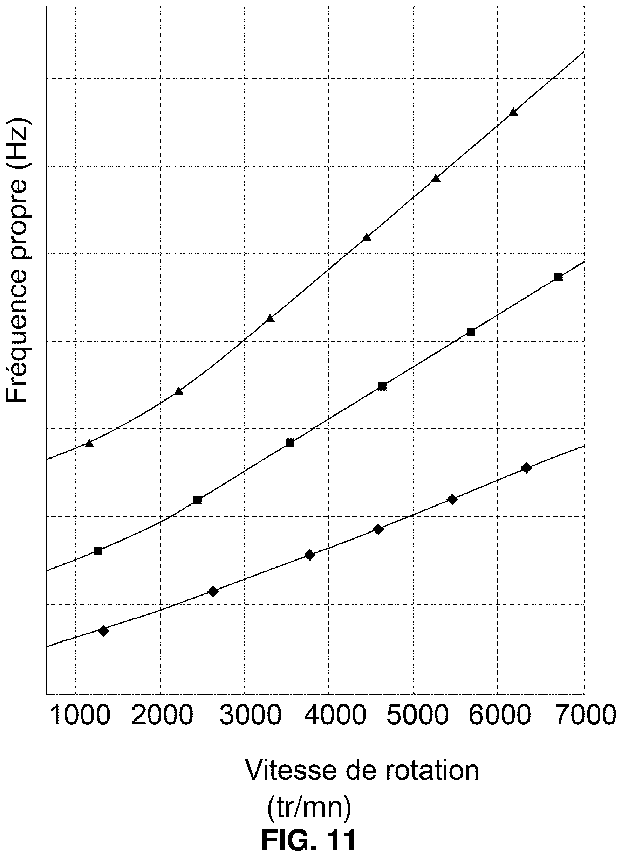

Dans une variante de réalisation, il est possible de dimensionner en plus les résonateurs de forme élancée et leur positionnement de manière à ce que tout ou partie des fréquences propres des résonateurs varient sensiblement proportionnellement à la vitesse de rotation, comme dans l'exemple de la figure 11 qui montre l'évolution en fonction de la vitesse de trois fréquences propres d'un des résonateurs.

Comme précédemment mentionné, selon une variante de réalisation de la présente invention, il est possible de dimensionner l'ensemble des résonateurs de telle manière que les séries fréquentielles des premières λ^{k}₁ et des deuxièmes λ^{k}₂, voire des troisièmes fréquences propres λ^{k}₃ avec k variant de 1 à n des résonateurs du dispositif de piège vibratoire selon l'invention forment dans leur ensemble un recouvrement régulier d'un seul grand intervalle fréquentiel, dans lequel le dispositif de piège pourra être efficace.

Si on range N résonateurs de façon à ce que les λ^{k}₁ soient dans un ordre croissant suivant le repère k, au voisinage de la première fréquence propre λ^{N}₁ la plus élevée on pourra trouver la moins élevée des deuxièmes fréquences propres λ¹₂. On peut bien entendu et plus généralement utilement choisir de faire des recouvrements et/ou des enchevêtrements fréquentiels de ces différentes séries de modes propres pour couvrir toute une bande de fréquences dans laquelle il est souhaité piéger efficacement des vibrations néfastes.

Les avantages du dispositif selon la présente invention par rapport aux dispositifs de piège vibratoires selon l'état de la technique est le traitement plus efficace du dispositif selon la présente invention parce qu'il ne crée pas ou peu de résonances néfastes en lieu et place de celles qu'il a pu réduire ou éliminer.

Le dispositif de piège selon la présente invention est efficace sur une assez large gamme de fréquences autour de la et/ou des fréquences où se produisent des résonances à traiter sur la structure tournante. Préférentiellement, le dispositif peut suivre un ou plusieurs ordres du moteur en s'adaptant alors à la vitesse de rotation du moteur ou du régime moteur qui varie.

La masse globalement ajoutée au système à traiter à travers le dispositif selon la présente invention est réduite en comparaison de la masse ajoutée que représenterait un dispositif de piège sous forme d'un batteur classique ne comportant qu'un résonateur.

Par son architecture, le dispositif de piège vibratoire selon la présente invention peut dissiper les vibrations indésirables sans avoir recours à des matériaux organiques fortement amortis, comme par exemple les caoutchoucs ou polymères, pour réaliser la fonction principale de raideur des résonateurs. Cela rend le dispositif notamment plus robuste et fiable dans le temps.

Par son architecture précédemment détaillée, le dispositif selon l'invention autorise un bon équilibrage inertiel du dispositif de piège vibratoire et évite l'apparition de balourds statiques et/ou dynamiques dommageables dans la structure tournante.

L'invention n'est nullement limitée aux modes de réalisation décrits et illustrés qui n'ont été donnés qu'à titre d'exemples.

## Revendications

1. Dispositif (1) de piège vibratoire destiné à venir se fixer sur une structure tournante sujette à des vibrations de torsion, le dispositif (1) étant monté sur un axe (2) de rotation destiné à être celui de la structure tournante et comprenant plusieurs résonateurs (3) vibratoires pour le piégeage des vibrations, les résonateurs (3) vibratoires étant voisins spatialement les uns des autres en étant liés à la structure tournante directement, ou indirectement par un support (4) commun, chaque résonateur (3) présentant la forme d'une lame avec une extrémité libre et une extrémité fixée rigidement au support (4) ou à la structure tournante, la largeur de cette lame étant alignée avec l'axe de rotation , chaque résonateur (3) présentant des fréquences propres de vibration, chaque résonateur (3) étant réalisé en un matériau métallique, le dispositif (1) présentant au moins partiellement une forme d'étoile avec chaque résonateur (3) formant une branche de l'étoile, l'extrémité libre étant plus éloignée de l'axe (2) de rotation que l'extrémité fixée, la distribution spatiale des masses du dispositif (1) satisfaisant à son équilibrage inertiel relativement à l'axe (2) de rotation, **caractérisé en ce que** au moins un résonateur (3) est torsadé.

2. Dispositif (1) selon la revendication 1, dans lequel le résonateur (3) est torsadé en une seule torsion de 90°.

3. Dispositif (1) selon la revendication 2, dans lequel, quand plusieurs résonateurs (3) sont torsadés en présentant chacune un noeud de torsion, les noeuds de torsion des résonateurs (3) se trouvent à des distances différentes de l'axe de rotation (2) du dispositif (1).

4. Dispositif (1) selon l'une quelconque des revendications précédentes, dans lequel au moins une partie des résonateurs (3) a une fibre neutre curviligne et / ou présente une inclinaison non nulle par rapport à un rayon partant de l'axe (2) de rotation et passant par l'extrémité fixée du résonateur (3).

5. Dispositif (1) selon la revendication précédente, dans lequel les résonateurs (3) présentent un point d'inflexion qui sépare chaque résonateur (3) en deux parties rectilignes formant un angle entre elles dans un plan orthogonal à l'axe (2) de rotation du dispositif (1).

6. Dispositif (1) selon l'une des revendications précédentes, dans lequel les fréquences propres des résonateurs (3) sont différentes, en couvrant un intervalle fréquentiel destiné à s'étendre autour d'une ou des fréquences de résonance à traiter de la structure tournante, chaque résonateur (3) ayant son spectre de fréquences propres légèrement décalé par rapport à celui des autres résonateurs (3).

7. Dispositif (1) selon la revendication 6, dans lequel au moins un résonateur (3) varie, en fonction de la distance à l'axe (2) de rotation du dispositif (1), en forme et/ou en aire de section par rapport à la fibre neutre du résonateur (3).

8. Dispositif (1) selon la revendication 7, dans lequel ledit au moins un résonateur (3) comprend une première portion (5) longitudinale la plus proche de l'axe (2) de rotation présentant une première section et une deuxième portion (6) longitudinale la plus éloignée de l'axe (2) de rotation présentant une deuxième section, la première section étant d'aire inférieure à celle de la deuxième section.

9. Dispositif (1) selon l'une quelconque des revendications précédentes, dans lequel les résonateurs (3) sont agencés les uns par rapport aux autres pour qu'au moins une partie des fréquences propres des résonateurs (3) évolue selon un rapport de proportionnalité avec la vitesse de rotation du dispositif (1).

10. Dispositif (1) selon l'une quelconque des revendications précédentes, comprenant un collier (7) amortissant et concentrique à l'axe (2) de rotation lié aux résonateurs (3) à proximité de leur extrémité fixée.

11. Dispositif (1) selon l'une quelconque des revendications précédentes, dans lequel un dépôt (8) de matière amortissante est présent à la base de l'extrémité fixée du résonateur (3).

12. Dispositif (1) selon l'une quelconque des revendications précédentes, dans lequel les résonateurs (3) ont des distributions de fréquences propres telles que l'écart entre la plus faible et la plus élevée des fréquences propres fondamentales de ces résonateurs (3) est supérieur à 10% de la valeur moyenne de l'ensemble de ces fréquences propres fondamentales.

13. Dispositif (1) selon l'une quelconque des revendications précédentes, dans lequel au moins une partie des résonateurs (3) garde une section transversale convexe en fonction de sa distance à l'axe de rotation (2) du dispositif (1).

14. Ensemble de piège vibratoire, **caractérisé en ce qu'**il comprend un empilage le long de l'axe (2) de rotation de plusieurs dispositifs (1) selon l'une quelconque des revendications précédentes.

## Patentansprüche

1. Schwingungsfallenvorrichtung (1), die dazu bestimmt ist, sich auf einer drehenden Struktur zu befestigen, die Torsionsschwingungen unterliegt, wobei die Vorrichtung (1) auf eine Rotationsachse (2) montiert ist, die dazu bestimmt ist, die der drehenden Struktur zu sein, und die mehrere Schwingungsresonatoren (3) für das Fangen der Schwingungen umfasst, wobei die Schwingungsresonatoren (3) räumlich zueinander benachbart sind, während sie mit der drehenden Struktur direkt oder indirekt durch einen gemeinsamen Träger (4) verbunden sind, wobei jeder Resonator (3) die Form einer Klinge mit einem freien Ende und einem Ende, das starr an dem Träger (4) oder an der drehenden Struktur befestigt ist, aufweist, wobei die Breite dieser Klinge mit der Rotationsachse ausgerichtet ist, wobei jeder Resonator (3) Schwingungseigenfrequenzen aufweist, wobei jeder Resonator (3) aus einem metallischen Material hergestellt ist, wobei die Vorrichtung (1) mindestens teilweise eine Sternform aufweist, wobei jeder Resonator (3) einen Schenkel des Sterns bildet, wobei das freie Ende weiter von der Rotationsachse (2) als das befestigte Ende ist, wobei die räumliche Verteilung der Massen der Vorrichtung (1) ihren Trägheitsausgleich bezüglich der Rotationsachse (2) erfüllt, **dadurch gekennzeichnet, dass** der Resonator (3) verdrillt ist.

2. Vorrichtung (1) nach Anspruch 1, wobei der Resonator (3) in einer einzigen Torsion um 90° verdrillt ist.

3. Vorrichtung (1) nach Anspruch 2, wobei, wenn mehrere Resonatoren (3) verdrillt sind, indem jeder einen Torsionsknoten aufweist, die Torsionsknoten der Resonatoren (3) in unterschiedlichen Entfernungen von der Rotationsachse (2) der Vorrichtung (1) liegen.

4. Vorrichtung (1) nach einem der vorstehenden Ansprüche, wobei mindestens ein Teil der Resonatoren (3) eine gebogene neutrale Faser und/oder eine Neigung nicht gleich null bezüglich eines Radius aufweist, der von der Rotationsachse (2) ausgeht und durch das befestigte Ende des Resonators (3) durchgeht.

5. Vorrichtung (1) nach dem vorstehenden Anspruch, wobei die Resonatoren (3) einen Wendepunkt aufweisen, der jeden Resonator (3) in zwei geradlinige Teile trennt, die zueinander einen Winkel in einer Ebene orthogonal zu der Rotationsachse (2) der Vorrichtung (1) bilden.

6. Vorrichtung (1) nach einem der vorstehenden Ansprüche, wobei die Eigenfrequenzen der Resonatoren (3) unterschiedlich sind, indem sie ein Frequenzintervall decken, das dazu bestimmt ist, sich um eine oder mehrere der zu verarbeitenden Resonanzfrequenzen der drehenden Struktur zu erstrecken, wobei jeder Resonator (3) sein Eigenfrequenzspektrum bezüglich deren der anderen Resonatoren (3) leicht verlagert hat.

7. Vorrichtung (1) nach Anspruch 6, wobei mindestens ein Resonator (3) in Abhängigkeit von der Entfernung zu der Rotationsachse (2) der Vorrichtung (1) in Form und/oder Querschnittfläche bezüglich der neutralen Faser des Resonators (3) variiert.

8. Vorrichtung (1) nach Anspruch 7, wobei der mindestens eine Resonator (3) einen ersten Längsabschnitt (5) umfasst, der der Rotationsachse (2) am nächsten liegt, der einen ersten Querschnitt aufweist, und einen zweiten Längsabschnitt (6), der am weitesten von der Rotationsachse (2) entfernt ist, der einen zweiten Querschnitt aufweist, wobei der erste Querschnitt eine kleinere Fläche als die des zweiten Querschnitts aufweist.

9. Vorrichtung (1) nach einem der vorstehenden Ansprüche, wobei die Resonatoren (3) zueinander eingerichtet sind, damit sich mindestens ein Teil der Eigenfrequenzen der Resonatoren (3) gemäß einem Anteilsverhältnis mit der Rotationsdrehzahl der Vorrichtung (1) entwickelt.

10. Vorrichtung (1) nach einem der vorstehenden Ansprüche, die einen Bund (7), der dämpft und zu der Rotationsachse (2) konzentrisch ist, umfasst, der mit den Resonatoren (3) in der Nähe ihres befestigten Endes verbunden ist.

11. Vorrichtung (1) nach einem der vorstehenden Ansprüche, wobei eine Ablagerung (8) dämpfenden Materials an der Basis des befestigten Endes des Resonators (3) anwesend ist.

12. Vorrichtung (1) nach einem der vorstehenden Ansprüche, wobei die Resonatoren (3) Eigenfrequenzverteilungen derart aufweisen, dass der Abstand zwischen der niedrigsten und der höchsten der Eigengrundfrequenzen dieser Resonatoren (3) größer ist als 10 % des mittleren Werts sämtlicher dieser Eigengrundfrequenzen.

13. Vorrichtung (1) nach einem der vorstehenden Ansprüche, wobei mindestens ein Teil der Resonatoren (3) einen konvexen Querschnitt in Abhängigkeit von seiner Entfernung von der Rotationsachse (2) der Vorrichtung (1) wahrt.

14. Schwingungsfalleneinheit, **dadurch gekennzeichnet, dass** sie eine Stapelung entlang der Rotationsachse (2) aus mehreren Vorrichtungen (1) nach einem der vorstehenden Ansprüche umfasst.

## Claims

1. A vibrating-trap device (1) intended to be fixed to a rotating structure subject to torsion vibrations, the device (1) being mounted on a rotation axis (2) intended to be that of the rotating structure and including several vibrating resonators (3) to trap the vibrations, the vibrating resonators being spatially adjacent to one another and being connected to the rotating structure directly, or indirectly by a common support (4), each resonator (3) having the shape of a blade with a free end and an end rigidly fixed to the support (4) or to the rotating structure, the width of this blade being aligned with the rotation axis, each resonator (3) having natural vibration frequencies, each resonator (3) being made from a metallic material, the device (1) having at least partially a star shape with each resonator (3) forming a branch of the star, the free end being more remote from the rotation axis (2) than the fixed end, the spatial distribution of the masses of the device (1) achieving its inertial equilibrium relative to the rotation axis (2), **characterized in that** at least one resonator (3) is twisted.

2. The device (1) according to Claim 1, in which the resonator (3) is twisted in a single torsion of 90°.

3. The device (1) according to Claim 2, in which, when several resonators (3) are twisted, each presenting a torsion node, the torsion nodes of the resonators (3) are situated at different distances from the rotation axis (2) of the device (1).

4. The device (1) according to any one of the preceding claims, in which at least a portion of the resonators (3) has a curvilinear neutral axis and/or has a non-zero inclination with respect to a radius originating from the rotation axis (2) and passing through the fixed end of the resonator (3).

5. The device (1) according to the preceding claim, in which the resonators (3) have an inflexion point which separates each resonator (3) into two rectilinear parts forming an angle between them in a plane orthogonal to the rotation axis (2) of the device (1).

6. The device (1) according to one of the preceding claims, in which the natural frequencies of the resonators (3) are different, covering a frequency interval intended to extend around one resonance frequency or frequencies to be treated of the rotating structure, each resonator (3) having its spectrum of natural frequencies slightly offset with respect to that of the other resonators (3).

7. The device (1) according to Claim 6, in which at least one resonator (3) varies, as a function of the distance to the rotation axis (2) of the device (1), in form and/or in sectional area with respect to the neutral axis of the resonator (3).

8. The device (1) according to Claim 7, in which said at least one resonator (3) includes a first longitudinal portion (5) closest to the rotation axis (2) having a first section and a second longitudinal portion (6) most distant from the rotation axis (2) having a second section, the first section having a smaller area than that of the second section.

9. The device (1) according to any one of the preceding claims, in which the resonators (3) are arranged with respect to one another so that at least a portion of the natural frequencies of the resonators (3) develops according to a proportionality relationship with the rotation speed of the device (1).

10. The device (1) according to any one of the preceding claims, including a damping collar (7) concentric to the rotation axis (2), linked to the resonators (3) close to their fixed end.

11. The device (1) according to any one of the preceding claims, in which a deposit (8) of damping material is present at the base of the fixed end of the resonator (3) .

12. The device (1) according to any one of the preceding claims, in which the resonators (3) have distributions of natural frequencies such that the gap between the lowest and the highest of the fundamental natural frequencies of these resonators (3) is greater than 10% of the mean value of the whole of these fundamental natural frequencies.

13. The device (1) according to any one of the preceding claims, in which at least a portion of the resonators (3) maintains a convex transverse section as a function of its distance from the rotation axis (2) of the device (1).

14. A vibrating-trap assembly, **characterized in that** it includes a stack along the rotation axis (2) of several devices (1) according to any one of the preceding claims.
